Europäisches Patentamt

European Patent Office

Office européen des brevets

(19)

(11) Veröffentlichungsnummer: **0 360 863**

**A1**

(12) **EUROPÄISCHE PATENTANMELDUNG**
veröffentlicht nach Art. 158 Abs. 3
EPÜ

(21) Anmeldenummer: **88900958.5**

(22) Anmeldetag: **12.11.87**

(86) Internationale Anmeldenummer:
**PCT/SU87/00126**

(87) Internationale Veröffentlichungsnummer:
**WO 89/01996 (09.03.89 89/06)**

(51) Int. Cl.5: **C25D 15/00 , C25B 11/04 , C25B 11/10**

(30) Priorität: **27.08.87 SU 4308860**

(43) Veröffentlichungstag der Anmeldung:
**04.04.90 Patentblatt 90/14**

(84) Benannte Vertragsstaaten:
**CH DE FR GB LI**

(71) Anmelder: **KISHINEVSKY POLITEKHNICHESKY INSTITUT IMENI S.LAZO**
**pr. Lenina, 168**
**Kishinev, 277004(SU)**

(72) Erfinder: **GROZA, Ivan Antonovich**
**ul. Burlachenko, 5/4-7**
**Kishinev, 277030(SU)**
Erfinder: **LANDOLT, Diter**
**6, chemin du Bochet**
**CH-1025 Saint-Sulpice(CH)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **VERFAHREN UND NICKELOXIDELEKTRODE ZUM ANBRINGEN EINER NICKELOXIDSCHICHT AUF EINEN METALLTRÄGER.**

(57) Verfahren zum Auftragen eines Verbund-Nickeloxid-Überzuges auf eine Metallunterlage sieht das Ätzen der Unterlage, das Auftragen auf dieselbe einer Schicht des Überzuges aus einem Verbundwerkstoff, der sich aus metallischem Nickel und aus Nickeloxid-Nickelhydroxid zusammensetzt, durch elektrolytische Abscheidung aus einer wässerigen Nickeldichloridlösung mit einer Konzentration von 100 bis 130 g/l vor. Die elektrolytische Abscheidung erfolgt unter den potentiostatischen Verhältnissen bei Potentialwerten von (-950) bis (-1200) mV inbezug auf eine normale Wasserstoffelektrode, bei einer Temperatur von 20 bis 25° C.

# VERFAHREN ZUM AUFTRAGEN EINES VERBUND-NICKELOXID-ÜBERZUGES AUF EINE METALLUNTERLAGE UND EINE NICKELOXID-ELEKTRODE

## Gebiet der Technik

Die Erfindung bezieht sich auf das Gebiet der Galvanotechnik und betrifft sie insbesondere ein Verfahren zum Auftragen eines Verbund-Nickeloxid-Überzuges auf eine Metallunterlage sowie auf eine Nickeloxid-Elektrode, die in diesem Verfahren hergestellt wird.

## Vorhergehender Stand der Technik

Bekannt ist ein Verfahren zum Auftragen eines Verbund-Nickeloxid-Überzuges auf eine Metallunterlage, das das Ätzen der Unterlage und das Auftragen auf dieselbe einer Schicht des Überzugs aus einem Verbundwerkstoff, der sich aus Metallteilchen des Nickels und Nickeloxid-Nickelhydroxid zusammensetzt, durch elektrolytische Abscheidung aus einer wässerigen Lösung des Nickelsalzes vorsieht (US, A, 2708212). Im bekannten Verfahren wird die elektrolytische Abscheidung unter den galvanostatischen Verhältnissen aus einer wässerigen Nickelnitratlösung vorgenommen und dann wird der abgeschiedene Überzug durch Elektrolyse der Katodenbehandlung in einer auf 100 bis 110°C durchgewärmten Natriumhydroxidlösung mit dem Ziel seiner Verfestigung ausgesetzt.

Bekannt ist außerdem ein Verfahren zum Auftragen eines Verbund-Nickeloxid-Überzuges auf eine Metallunterlage, das keiner zusätzlichen Katodenbehandlung des auf die Unterlage aufgetragenen Überzuges bedarf. Für die elektrolytische Abscheidung eines derartigen Überzuges wird jedoch ein Elektrolyt unter Einsatz eines organischen Lösungsmittels, das instabil ist und sich schnell zersetzt, gebraucht, was einen derartigen Elektrolyt betriebsunkomfortabel macht (US, A, 3248266).

Bekannt ist letztlich ein Verfahren zum Auftragen eines Verbund-Nickeloxid-Überzuges auf eine Metallunterlage, in dem man für die elektrolytische Abscheidung einen Elektrolyt verwendet, der von 10 bis 80 Vol.% Äthanol, von 20 bis 90 Vol.% Wasser, von 70 bis 150 g/l Nickelnitrat und von 0 bis 15 g/l Kobaltnitrat enthält. Dieser Elektrolyt ist stabiler, man braucht jedoch für die elektrolytische Abscheidung des Überzuges, der sich aus Metallnickel und aus Nickeloxid-Nickelhydroxid zusammensetzt, die Temperatur des Elektrolyts nahe dem Siedepunkt zu unterhalten (US, A, 3827911).

Bekannt sind Nickeloxid-Elektroden, die in den obenbeschriebenen bekannten Verfahren hergestellt werden, die eine Unterlage aus einem korrosionsbeständigen Werkstoff und einen Überzug aus einem Verbundwerkstoff enthalten, der sich aus Metallnickel und Nickeloxid-Nickelhydroxid zusammensetzt.

Die in bekannten Verfahren hergestellten Nickeloxid-Elektroden zeichnen sich durch ein niedriges Potential der Sauerstoffentwicklung von ∼ 0,9 V bei einer Stromstärke von 2,5 A in 1 molarer Natriumhydroxidlösung aus, was für die Durchführung einer großen Anzahl elektrochemischer Oxydationsprozesse unter Einsatz von Nickeloxid-Elektroden nicht ausreichend ist.

Die Einschärnkung der Potentialgröße der Sauerstoffentwicklung mit einem Wert von ∼ 0, 9 V beim Einsatz von bekannten Nickeloxid-Elektroden ist darauf zurückzuführen, daß in dem Überzug dieser Elektroden ein hoher Prozentsatz (von 70 bis 80%) an Nickelhydroxid bei einem relativ niedrigem Prozentsatz an Nickeloxid (von 10 bis 15%) und an Metallnickel (von 10 bis 15%) enthalten ist. Das führt zur Senkung der Qualität des Überzuges, der eine spröde Struktur mit einer großen Anzahl von Rissen aufweist.

Offenbarung der Erfindung

Der Erfindung liegt die Aufgabe zugrunde, ein Verfahren zum Auftragen eines Verbund-Nickeloxid-Überzuges auf eine Metallunterlage zu entwickeln, das unter Verwendung eines in seiner Zusammensetzung einfachen und stabilen Elektrolyts durchgeführt werden kann, sowie eine Nickeloxid-Elektrode mit einem Überzug aus einem Verbundwerkstoff zu entwickeln, in dem der Prozentanteil an Nickelhydroxid herabgesetzt und gleichzeitig der Prozentanteil an Nickeloxid und an Metallnickel vergrößert wird, was es ermöglicht, das Potential der Sauerstoffentwicklung aus Alkalilaugen bei elektrochemischen Prozessen zu erhöhen.

Diese Aufgabe wird dadurch gelöst, daß man im Verfahren zum Auftragen eines Verbund-Nickeloxid-Überzuges auf eine Metallunterlage, das das Ätzen der Unterlage und das Auftragen auf dieselbe eines Überzuges aus einem Verbundwerkstoff, der sich aus Metallteilchen des Nickels und des Nickeloxid-Nickelhydroxids zusammensetzt, durch elektrolytische Abscheidung aus einer wässerigen Nickelsalzlösung vorsieht, erfindungsgemäß die elektrolytische Abscheidung unter den potentiostatischen Verhältnissen bei Potentialwerten von (-950) bis (-1200) mV, in bezug auf eine normale Wasserstoffelektrode, bei einer Temperatur von 20 bis 25°C durchführt und als Nickelsalz Nickeldichlorid mit einer Konzentration von 100 bis 130 g/l verwendet.

Die Aufgabe wird auch dadurch gelöst, daß in der Nickeloxid-Elektrode, die eine Unterlage aus korrosionsbeständigem Metall und einen Überzug aus einem Verbundwerkstoff enthält, der sich aus Metallnickel und aus Nickeloxid-Nickelhydroxid zusammensetzt, erfindungsgemäß der Überzug aus einem Verbundwerkstoff mit folgendem Verhältnis der Komponenten aus-geführt ist, %/cm$^3$ des Überzuges:

| | |
|---|---|
| metallisches Nickel | von 54 bis 25 |
| Nickeloxid | von 35 bis 60 |
| Nickelhydroxid | von 11 bis 15. |

Verfahren zum Auftragen eines Verbund-Nickeloxid-Überzuges auf eine Metallunterlage, das in Übereinstimmung mit der vorliegenden Erfindung realisiert wird, ermöglicht es, Nickeloxid-Überzüge mit einem hohen ( ∼ 50%) Prozentanteil an Nickeloxid im Überzug herzustellen, was seine homogene Struktur bewirkt und ermöglicht es, bei dem Einsatz der in dem gemäßen Verfahren hergestellten erfindungsgemäßen Nickeloxid-Elektroden das Potential der Sauerstoffentwicklung aus Alkalilaugen bis ∼ 2 V zu erhöhen. Das Verfahren wird unter Einsatz eines stabilen und billigen Elektrolyts,einer wässerigen Nickeldichlorid-Lösung, bei Raumtemperatur durchge-

führt und verlangt keine zusätzlichen Arbeitsgänge für die Verfestigung des niedergeschlagenen Überzuges.

Nachstehend wird die Erfindung anhand der Beschreibung einer konkreten Variante ihrer Ausführung erläutert.

Beste Ausführungsvariante der Erfindung

Verfahren zum Auftragen eines Verbund-Nickeloxid-Überzugs auf eine Metallunterlage besteht erfindungsgemäß in folgendem.

Eine Unterlage aus korrosionsbeständigem Metall setzt man dem Ätzen aus, dann trägt man auf dieselbe eine Überzugsschicht aus einem Verbundwerkstoff, der sich aus Metallteilchen des Nickels und des Nickeloxid-Nickelhydroxids zusammensetzt, durch elektrolytische Abscheidung aus einer wässerigen Nickeldichloridlösung mit einer Konzentration von 100 bis 130 g/l bei einer Temperatur von 20 bis 25°C auf. Die elektrolytische Abscheidung erfolgt unter den potentiostatischen Verhältnissen bei Potentialwerten von (-950) bis (-1200) mV in bezug auf eine normale Wasserstoffelektrode.

Die elektrolytische Abscheidung der Überzüge aus Elektrolyten mit einer Konzentration an Nickeldichlorid unter 100 g/l führt zur Senkung der Abscheidungsgeschwindigkeit und zu einem relativ nicht hohen ( ∿ 23%) Prozentanteil an metallischer Nickel-Phase, was die Homogenität des Überzuges verschlechtert; bei Konzentrationen über 130 g/l steigt der Prozentanteil der metallischen Nickel-Phase bis auf ∿ 80% an, was zur Senkung des Potentials der Sauerstoffentwicklung in den Alkalilaugen führt.

Die elektrolytische Prozeßführung bei Potentialwerten unter (-950) mV führt zur vorwiegenden Wasserstoffentwicklung auf der Unterlage und zur Verringerung der Abscheidungsgeschwindigkeit und der Stärke des Überzuges und bei Potentialwerten über (-1200) mV führt zur Verringerung der metallischen Nickel-Phase, der Abscheidungsgeschwindigkeit, zur Vergrößerung der Hydroxyl-Phase im Überzug und zur Senkung seiner Homogenität.

Eine Nickeloxid-Elektrode enthält erfindungsgemäß eine Unterlage aus einem korrosionsbeständigen Metall, beispielsweise, aus Nickel beziehungsweise Titan, und einen
auf dieselbe aufgetragenen Überzug aus einem Verbundwerkstoff, der sich aus metallischem Nickel und Nickeloxid-
Nickelhydroxid bei folgendem Verhältnis der Komponenten im
Überzug  zusammensetzt, %/cm$^3$ des Überzugs:

| metallisches Nickel | von 54 bis 25 | |
|---|---|---|
| Nickeloxid | von 35 bis 60 | von 46 |
| Nickelhydroxid | von 11 bis 15 | bis 75 |

Zu einer eindeutigeren Erläuterung des Wesens der vorliegenden Erfindung werden nachstehend konkrete Beispiele
ihrer Ausführung angeführt.

Es wurden Unterlagen aus Nickel  beziehungsweise Titan
mit Abmessungen von 20 cm$^2$ x 0,1 cm genommen und dem Ätzen
innerhalb von 2 bis 3 Minuten ausgesetzt, und Unterlagen aus
Nickel in einer 15%igen wässerigen Schwefelsäurelösung und
Unterlagen aus Titan in einer 5%igen wässerigen Fluorwasserstoffsäurelösung genommen. Danach wurden die Unterlagen in
destilliertem Wasser sorgfältig gewaschen. Die elektrochemische Abscheidung der Überzüge erfolgte in Bädern, die 2 l
wässeriger Nickeldichlorid-Lösung mit einer Konzentration
von 100 bis 130 g/l enthalten, Anoden wurden aus Nickel
hergestellt. Die elektrolytische Abscheidung erfolgte unter
potentiostatischen Verhältnissen bei Potentialwerten von
(-950) bis (-1200) mV in bezug auf normale Wasserstoffelektrode und  bei einer Temperatur des Elektrolyts von 20 bis
25°C.

Die gemäß dem erfindungsgemäßen Verfahren hergestellten
Nickeloxid-Elektroden  zeichneten sich durch eine hohe Adhäsion mit der Unterlage aus, hatten schwarze Farbe und homogene Struktur und stellten einen Verbundwerkstoff dar, der
sich aus metallischem Nickel und aus Teilchen des Nickeloxid-Nickelhydroxids bei folgendem Verhältnis der Komponenten im Überzug zusammensetzt, %/cm$^3$ des Überzuges:

| metallisches Nickel | von 54 bis 25 | |
|---|---|---|
| Nickeloxid | von 35 bis 60 | von 46 |
| Nickelhydroxid | von 11 bis 15 | bis 75 |

Die Zusammensetzung und die Stärke der Überzüge hängt von den Potentialwerten und von der Konzentration des Nickeldichlorids im Elektrolyt ab, bei denen die elektrolytische Abscheidung erfolgt. Diese Abhängigkeit ist aus der Tabelle 1 zu ersehen, in der die Information über Beispiele der konkreten Ausführung des Verfahrens aufgeführt ist. Zum Vergleich der Ergebnisse wurden Beispiele Nr. 1, 5, 11 und 12 bei Parametern durchgeführt, die über die erfindungsgemäßen Grenzen hinaus gehen.

Tabelle

| Bezeichnung | | Beispiele | | | |
|---|---|---|---|---|---|
| | 1 | 2 | 3 | 4 | 5 |
| 1 | 2 | 3 | 4 | 5 | 6 |
| 1. Zusammensetzung des Elektrolyts Nickeldichlorid, g/l | 80 | 100 | 120 | 130 | 140 |
| 2. Spezifische Leitfähigkeit des Elektrolyts, $Ohm^{-1}/cm$ | 64 | 73 | 79,6 | 83 | 86 |
| 3. pH des Elektrolyts | 4,8 | 3,1 | 2,8 | 2,6 | 2,1 |
| 4. Potentialwert in bezug auf die normale Elektrode, mV | -950 | -950 | -950 | -950 | -950 |
| 5. Geschwindigkeit der Abscheidung, $mg/min.cm^2$ | 0,03 | 0,1 | 0,16 | 0,23 | 0,4 |
| 6. Gehalt an metallischer Nickel-Phase, $\%/cm^3$ des Überzuges | 23 | 73,2 | 79,5 | 80 | 89 |
| 7. Gehalt an/Nickeloxid + Nickelhydroxid/,$\%/cm^3$ des Überzuges | 77 | 26,8 | 20,5 | 20 | 11 |
| 8. Überzugsstärke, $\mu$m | 15 | 21 | 23 | 23 | 31 |
| 9. Potentialwert der Sauerstoffentwicklung in 1 molarer Natriumhydroxid-Lösung in bezug auf eine normale Wasserstoffelektrode | 1,2 | 1,1 | 1,06 | 1,0 | 0,890 |

Fortsetzung der Tabelle

| | B e i s p i e l e | | | | | | |
|---|---|---|---|---|---|---|---|
| | 6 | 7 | 3 | 9 | 10 | 11 | 12 |
| 1 | 7 | 8 | 9 | 10 | 11 | 12 | 13 |
| 1. | 120 | 120 | 120 | 120 | 130 | 140 | 120 |
| 2. | 79,6 | 79,6 | 79,6 | 79,6 | 83 | 36 | 79,6 |
| 3. | 2,3 | 2,8 | 2,3 | 2,8 | 2,6 | 2,1 | 2,3 |
| 4. | −1000 | −1050 | −1100 | −1200 | −1100 | −1100 | −1350 |
| 5. | 0,34 | 0,38 | 0,42 | 0,36 | 0,12 | 0,09 | 0,06 |
| 6. | 54 | 48 | 39,6 | 36 | 25,3 | 31 | 12 |
| 7. | 46 | 52 | 60,4 | 64 | 74,4 | 19 | 88 |
| 8. | 40 | 45 | 43 | 42 | 22 | multige pulver-artige Überzüge | |
| 9. | 1,6 | 1,73 | 1,96 | 1,8 | 1,47 | − | − |

Industrielle Anwendbarkeit

Nickeloxid-Elektrode, die gemäß der erfindungsgemäßen Verfahren hergestellt werden, können in der chemischen Industrie bei Prozeßführung unter Oxydationsverhältnissen und bei organischer Synthese, in den Anlagen für Wasserreinigung sowie in Kadmium-Nickel-Energieträgern und in den Sonnenbatterien umfassende Anwendung finden.

PATENTANSPRÜCHE:

1. Verfahren zum Auftragen eines Verbund-Nickeloxid-Überzuges auf eine Metallunterlage, das das Ätzen der Unterlage und das Auftragen auf dieselbe eines Überzuges aus einem Verbundwerkstoff, der sich aus metallischem Nickel und aus Nickeloxid-Nickelhydroxid zusammensetzt, durch elektrolytische Abscheidung aus einer wässerigen Nickelsalzlösung vorsieht, dadurch g e k e n n z e i c h --n e t , daß man die elektrolytische Abscheidung unter den potentiostatischen Verhältnissen von (-950) bis (-1200) mV, bezogen auf eine normale Wasserstoff-Elektrode, bei einer Temperatur von 20 bis 25°C durchführt und als Nickelsalz Nickeldichlorid mit einer Konzentration von 100 bis 130 g/l verwendet.

2. Nickeloxid-Elektrode, die eine Unterlage aus einem korrosionsbeständigen Metall und aus einem Verbundwerkstoff-Überzug, der sich aus metallischem Nickel und aus Nickeloxid-Nickelhydroxid zusammensetzt, enthält, dadurch g e -k e n n z e i c h n e t , daß der Überzug aus dem Verbundwerkstoff bei folgendem Verhältnis der Komponenten ausge-führt ist, $\%/cm^3$ des Überzuges:

| | |
|---|---|
| Metallnickel | von 54 bis 25 |
| Nickeloxid | von 35 bis 60 |
| Nickelhydroxid | von 11 bis 15. |

# INTERNATIONAL SEARCH REPORT

International Application No PCT/SU 87/00126

## I. CLASSIFICATION OF SUBJECT MATTER (if several classification symbols apply, indicate all) [6]

According to International Patent Classification (IPC) or to both National Classification and IPC

IPC[4]:  C 25 D 15/00, C 25 B 11/04, 11/10

## II. FIELDS SEARCHED

| Minimum Documentation Searched [7] | |
|---|---|
| Classification System | Classification Symbols |
| IPC[4] | C 25 D 15/00, C 25 B 11/04, 11/10 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | R.S. Saifullin "Kombinirovannye elektrotekhnicheskie pokrytia i materialy", 1972, Khimia, (Moscow), see pages 67-68 | I |
| A | PLATING, T. 55, No. 3, 1968, (American Electroplaters' Society, Inc, New Jersey), V.P. Greco et al. "Electrodeposition of $Ni-Al_2O_3$, $Ni-TiO_2$, and $Cr-TiO_2$ Dispersion Hardened Alloys," see pages 250-251, 254-257 | I |
| A | P.M. Vyacheslavov "Novye elektrokhimicheskie pokrytia", 1972, Lenizdat, (Leningrad), see page 171 | I |
| A | US,A, 3827911, (D.F. Pickett), 6 August 1974 (06.08.74), see examples 1-3 | 2 |
| A | M.Ya. Fioshin et al. "Elektrokhimicheskie sistemy v sinteze khimicheskikh produktov, 1985, Khimia, (Moscow) see pages 50-52 | 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 29 February 1988   (29.02.88) | 31 March 1988   (31.03.88) |
| International Searching Authority | Signature of Authorized Officer |
| ISA/SU | |

Form PCT/ISA/210 (second sheet) (January 1985)